# EUROPEAN PATENT APPLICATION

(11) **EP 2 695 802 A1**
(43) Date of publication of application: **12.02.2014**
(21) Application number: 13003927.4
(22) Date of filing: 06.08.2013
(51) Int. Cl.: B62J 3/00, A63C 17/14, B62K 3/00

(54) **Skater with brake**

(30) Priority: 10.08.2012 JP 2012177637; 21.09.2012 JP 2012207665
(71) Applicant: J.D. JAPAN Co., Ltd., Minoh-shi Osaka 562-0036 (JP)
(72) Inventor: Yamabe, Hideyasu, Minoh-shi, Osaka, 562-0036 (JP)
(74) Representative: Engelhardt, Harald

(57) **Abstract**

A new skater (1) with a brake is provided with a device for generating a warning signal such as an alarm sound. The skater (1) includes: a brake plate (4) that extends above a wheel (3) while being supported so as to swing in a vertical direction, the brake plate (4) being brought into sliding contact with the outer surface of the wheel (3) so as to brake the wheel; a driven roller (12) that rotates in contact with the wheel (3) in synchronization with a swing of the brake plate (4); and a bell (13) that generates a warning signal in response to the rotation of the driven roller (12). The swing of the brake plate (4) brings the driven roller (12) into contact with the wheel (3) so as to generate the warning signal from the bell (13), and the brake plate (4) comes into sliding contact with the outer surface of the wheel (3) so as to brake the wheel.

## Description

### Field of the Invention

The present invention relates to a skater with a brake, and particularly relates to a kick skater that can generate a driving force by a rider's kick on a running surface, for example, a skater including a brake with a wheel fender acting as a brake shoe.

### Background of the Invention

A conventionally known skater with a brake slows down when a rider presses a brake plate to the outer surface of a wheel provided in the rear of a board body (for example, see Japanese Patent Laid-Open No. 2010-273904).

A skater with a brake in Japanese Patent Laid-Open No. 2010-273904 has a pressing part on the inner surface of a brake plate. When the pressing part is pressed to the outer surface of a wheel, the wheel is braked.

However, the skater with the brake in Japanese Patent Laid-Open No. 2010-273904 does not have a device for generating a warning signal such as an alarm sound. Thus, the warning signal cannot be generated during riding or deceleration.

An object of the present invention is to provide a new skater with a brake, the skater including a device for generating a warning signal such as an alarm sound.

### Disclosure of the Invention

A solution to the problem of the present invention will be described below.

A skater with a brake according to the present invention is a skater with a brake, the skater including a brake plate that extends above a wheel while being supported so as to swing in a vertical direction, the brake plate being pressed from above in sliding contact with the outer surface of the wheel so as to brake the wheel, the skater including: a driven roller that rotates in contact with the wheel in synchronization with a swing of the brake plate; and a signal generator that generates a warning signal in response to the rotation of the driven roller, wherein the swing of the brake plate brings the driven roller into contact with the wheel so as to generate the warning signal from the signal generator, and the brake plate comes into sliding contact with the outer surface of the wheel so as to brake the wheel.

Furthermore, the brake plate is provided for the wheel attached on a board body.

Moreover, the brake plate is provided for the wheel operated by a handlebar.

Furthermore, a swing arm is supported by the brake plate in a swinging manner, and the driven roller is rotatably supported by the swing arm and is rotated in contact with the wheel by a swing of the swing arm.

Moreover, the swing arm includes a positioning member that regulates the swing arm at a position where a clearance is formed between the wheel and the driven roller.

Furthermore, the swing arm includes a repositioning member that changes the position of the swing arm relative to the brake plate so as to change the position of the driven roller relative to the wheel.

The present invention achieves the following effect:

The skater with the brake can travel or decelerate while a warning signal such as an alarm sound is issued.

### Brief Description of the Drawings

FIG. 1 is a front perspective view illustrating a skater with a brake according to an embodiment of the present invention;
FIG. 2A is a side view illustrating the vicinity of a wheel of the skater with the brake;
FIG. 2B is a plan view illustrating the vicinity of the wheel of the skater with the brake;
FIG. 3A is a side cross-sectional view illustrating the vicinity of the wheel of the skater with the brake;
FIG. 3B is a side cross-sectional view illustrating the vicinity of the wheel of the skater with the brake when a brake plate is slightly pressed;
FIG. 3C is a side cross-sectional view illustrating the vicinity of the wheel of the skater with the brake when the brake plate is strongly pressed;
FIG. 4A is a side view illustrating the vicinity of the wheel of the skater with the brake having a positioning member;
FIG. 4B is a plan view illustrating the vicinity of the wheel of the skater with the brake having the positioning member;
FIG. 5A is a side cross-sectional view illustrating the vicinity of the wheel of the skater with the brake having the positioning member;
FIG. 5B is a side cross-sectional view illustrating, when the brake plate is slightly pressed, the vicinity of the wheel of the skater with the brake having the positioning member;
FIG. 5C is a side cross-sectional view illustrating, when the brake plate is strongly pressed, the vicinity of the wheel of the skater with the brake having the positioning member;
FIG. 6A is a side cross-sectional view illustrating the vicinity of the wheel of the skater with the brake having the positioning member;
FIG. 6B is a side cross-sectional view illustrating, when the brake plate is strongly pressed, the vicinity of the wheel of the skater with the brake having the positioning member;
FIG. 7A is a side view illustrating the vicinity of the wheel of the skater with the brake having an adjusting screw;
FIG. 7B is a plan view illustrating the vicinity of the wheel of the skater with the brake having the adjusting screw;
FIG. 8A is a side cross-sectional view illustrating the vicinity of the wheel of the skater with the brake having the adjusting screw;
FIG. 8B is a side cross-sectional view illustrating, when the brake plate is strongly pressed, the vicinity of the wheel of the skater with the brake having the adjusting screw;
FIG. 9A is a side cross-sectional view illustrating the vicinity of the wheel of the skater with the brake having the adjusting screw;
FIG. 9B is a side cross-sectional view illustrating, when the brake plate is slightly pressed, the vicinity of the wheel of the skater with the brake having the adjusting screw;
FIG. 9C is a side cross-sectional view illustrating, when the brake plate is strongly pressed, the vicinity of the wheel of the skater with the brake having the adjusting screw;
FIG. 10A is a side cross-sectional view illustrating the vicinity of the wheel of the skater with the brake having the adjusting screw;
FIG. 10B is a side cross-sectional view illustrating, when the brake plate is strongly pressed, the vicinity of the wheel of the skater with the brake having the adjusting screw;
FIG. 11 is a side view illustrating the vicinity of the wheel of the skater with the brake capable of pivoting a swing arm;
FIG. 12 is a rear perspective view illustrating the vicinity of the wheel of the skater with the brake having a cover;
FIG. 13A is a perspective view of a handlebar and a brake lever;
FIG. 13B is a side view illustrating the vicinity of a wheel (the front wheel of the skater) operated by the handlebar;
FIG. 14A is a side cross-sectional view illustrating the vicinity of the wheel (the front wheel of the skater) operated by the handlebar before the brake lever is operated; and
FIG. 14B is a side cross-sectional view illustrating the vicinity of the wheel (the front wheel of the skater) operated by the handlebar when the brake lever is operated.

### Description of the Embodiment

The configuration of a skater 1 with a brake according to an embodiment of the present invention will be first described below with reference to the accompanying drawings.

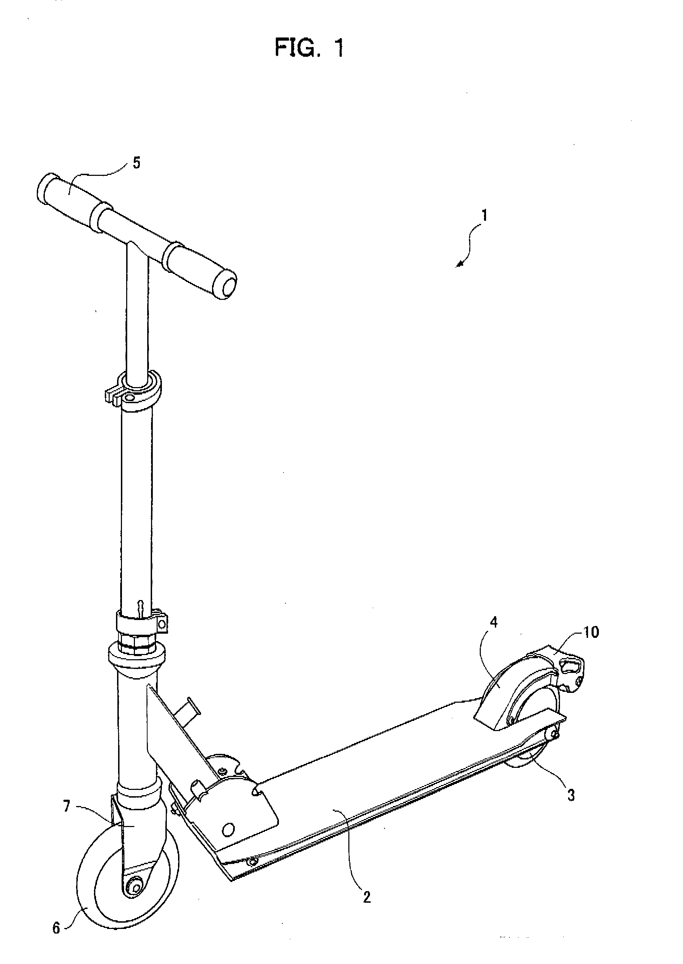

As shown in FIG. 1, a brake plate 4 acting as a braking device for a wheel 3 (the rear wheel of the skater 1) is provided in the rear of a board body 2 of the skater 1. The brake plate 4 also acts as the fender of the wheel 3.

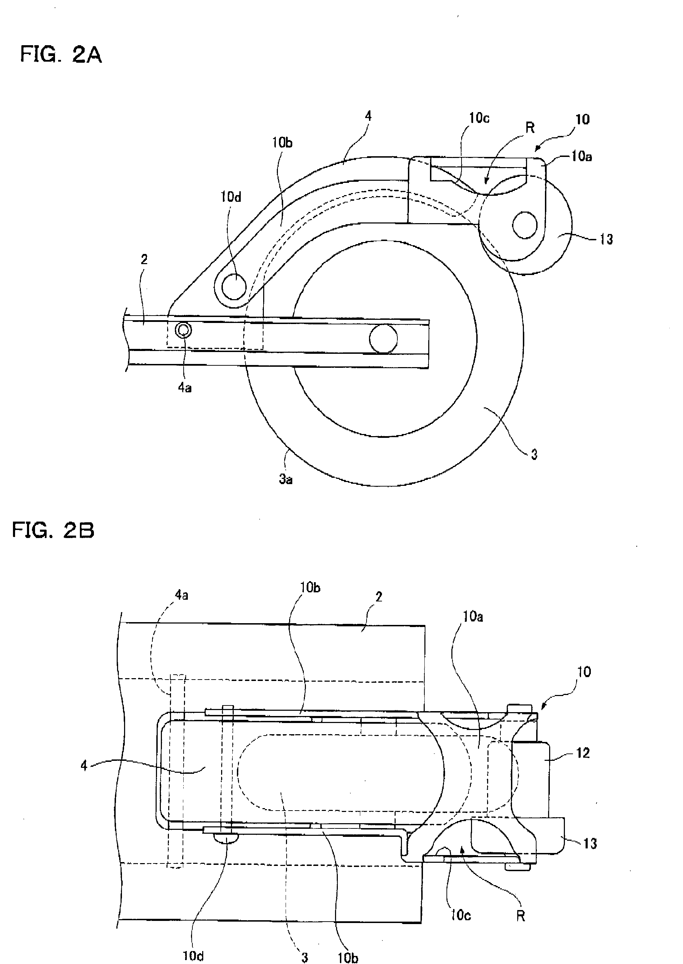

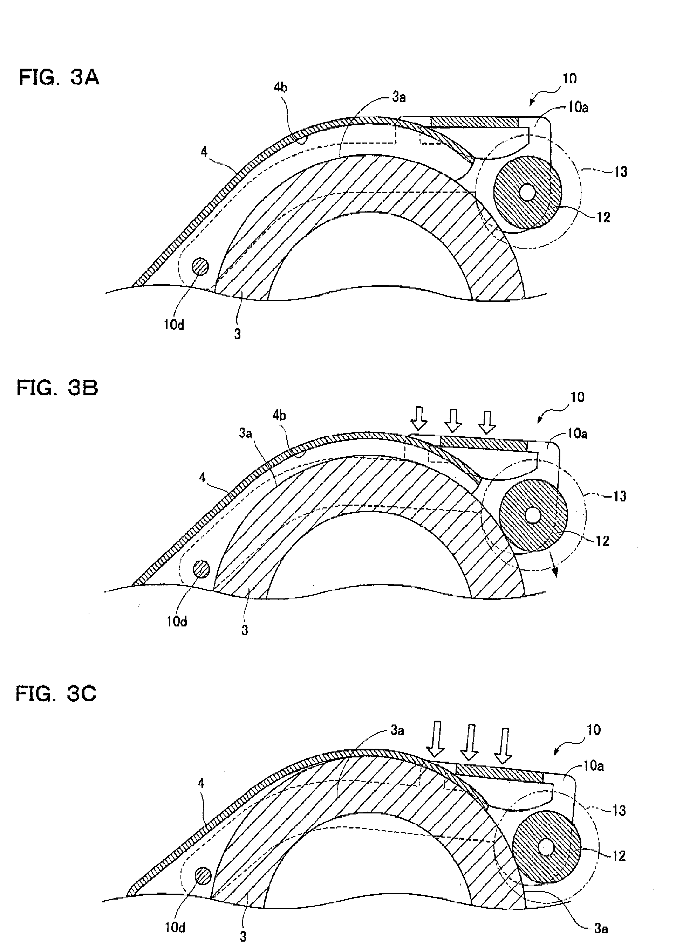

As shown in FIGS. 2A and 2B, the brake plate 4 can vertically swing with respect to a fulcrum 4a provided on the board body 2. The brake plate 4 has one end elastically supported by the board body 2 in front of the wheel 3, and is pressed outwardly from the wheel 3 by a spring. When a rider presses the brake plate 4 from above against the force of the spring, the brake plate 4 presses an outer surface 3a of the wheel 3. The brake plate 4 pressing the outer surface 3a of the wheel 3 applies a brake (brakes the wheel 3). As shown in FIG. 3A, when the rider does not press the brake plate 4, the brake plate 4 is biased by the spring with a certain clearance between the outer surface 3a of the wheel 3 and an inner surface 4b of the brake plate 4.

As shown in FIGS. 1, 2A, and 2B, a swing arm 10 is attached to the fixed end (front end) of the brake plate 4 in a swinging manner. As shown in FIG. 3A, the swing arm 10 is supported by the brake plate 4 such that a part of the swing arm 10 (a part of a pedal 10a, which will be described later) is brought into contact with the brake plate 4 by the weight of the swing arm 10. The brake plate 4 and the swing arm 10 are both pressed outwardly from the wheel 3 by the force of the spring. The swing arm 10 has the pedal 10a pressed by the rider and arms 10b supporting the pedal 10a.

As shown in FIGS. 2A and 2B, the pedal 10a is provided on the free end (rear side) of the swing arm 10. A notch 10c is formed on one end of the pedal 10a in the width direction (vertically in FIGS. 2A and 2B). The notch 10c forms a space R downward from the top surface of the pedal 10a. The space R may contain an operation lever 22 of a positioning member 20, which will be described later.

The arms 10b are provided along the sides of the brake plate 4. The arm 10b has one end (fixed end) pivotally supported by a pivot fulcrum 10d that is an attachment portion of the swing arm 10. The other end (free end) of the arm 10b supports the pedal 10a. A shaft constituting the pivot fulcrum 10d is provided behind (diagonally rearward) the pivot fulcrum 4a of the brake plate 4 so as to penetrate the sides of the brake plate 4.

As shown in FIGS. 2A and 2B, the free end of the swing arm 10 (at the rear of the board body 2) includes a driven roller 12 pivotally supported by the pedal 10a of the swing arm 10, and a bell 13 (signal generator) capable of generating an alarm sound (warning signal) in response to the torque of the rotating driven roller 12. The bell 13 may be a known bell whose weight is subjected to a centrifugal force by the torque of the driven roller 12 and hits or bounces off a bowl-shaped metallic member so as to generate a sound.

As shown in FIG. 3A, when the rider presses the brake plate 4 and/or the swing arm 10, the swing arm 10 and the driven roller 12 swing in synchronization with the brake plate 4. Then, as shown in FIG. 3B, the driven roller 12 rotates in contact with the outer surface 3a of the wheel 3 before the brake plate 4 comes into contact with the outer surface 3a of the wheel 3. Thus, the bell 13 is operated to issue an alarm sound without braking the wheel 3. After that, as shown in FIG. 3C, when the rider further presses the brake plate 4 and/or the swing arm 10, the brake plate 4 finally comes into contact with the outer surface 3a of the wheel 3 so as to brake the wheel 3. At this point, the driven roller 12 in contact with the rotating wheel 3 is shifted rearward with respect to the rotation center of the wheel 3 by the press on the brake plate 4.

In this way, the press on the brake plate 4 and/or the swing arm 10 changes the relative position of the driven roller 12 with respect to the wheel 3, reducing a distance between the wheel 3 and the driven roller 12. Finally, the driven roller 12 rotates in contact with the wheel 3, allowing the bell 13 to issue an alarm sound.

Moreover, a press on the brake plate 4 and/or the swing arm 10 changes the relative position of the brake plate 4 with respect to the wheel 3, reducing a distance between the wheel 3 and the brake plate 4. Finally, the brake plate 4 comes into contact with the wheel 3 so as to brake the wheel 3.

The swing arm 10 may have various configurations as follows:

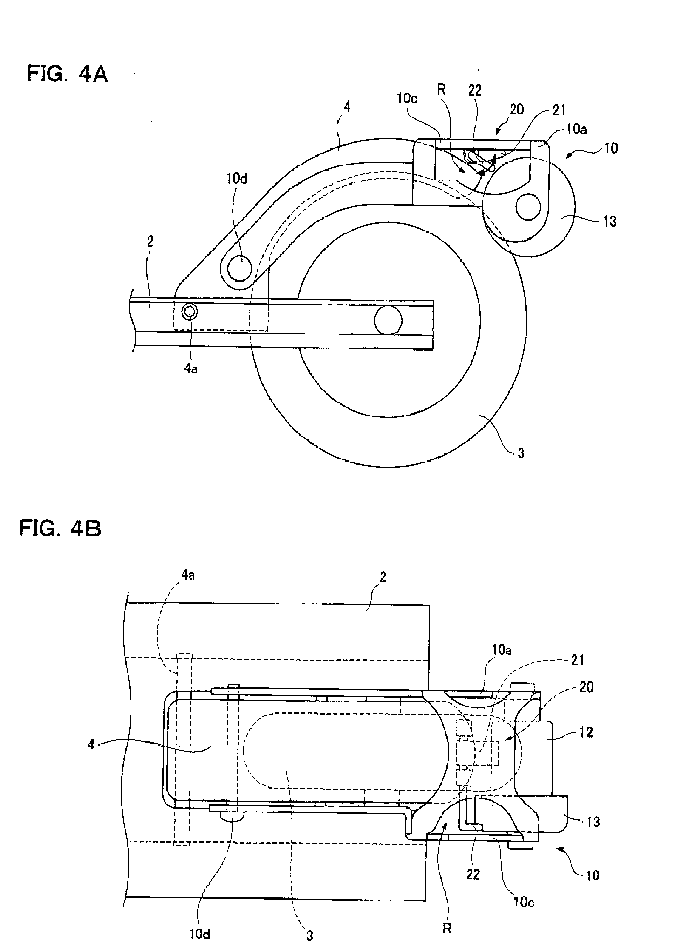

As shown in FIGS. 4A and 4B, the swing arm 10 may include the positioning member 20 that is brought into contact with the brake plate 4 so as to regulate the position of the swing arm 10 relative to the brake plate 4. In this case, the amount of press on the brake plate 4 and the timing for starting an alarm sound from the bell 13 are uniquely defined.

As shown in FIG. 4A, the positioning member 20 is movable. The positioning member 20 includes a contact member 21 that comes into contact with the brake plate 4 and the operation lever 22 for pivotally operating the contact member 21. The contact member 21 is provided between the pedal 10a of the swing arm 10 and the brake plate 4 and is pivotally supported by the pedal 10a. The operation lever 22 is provided in the space R formed by the swing arm 10. The operation lever 22 provided in the space R is operable in the space R. Thus, when the rider presses the brake plate 4 and/or the swing arm 10, the operation lever 22 does not come into contact with the brake plate 4 and/or the swing arm 10 and thus does not interfere with the press.

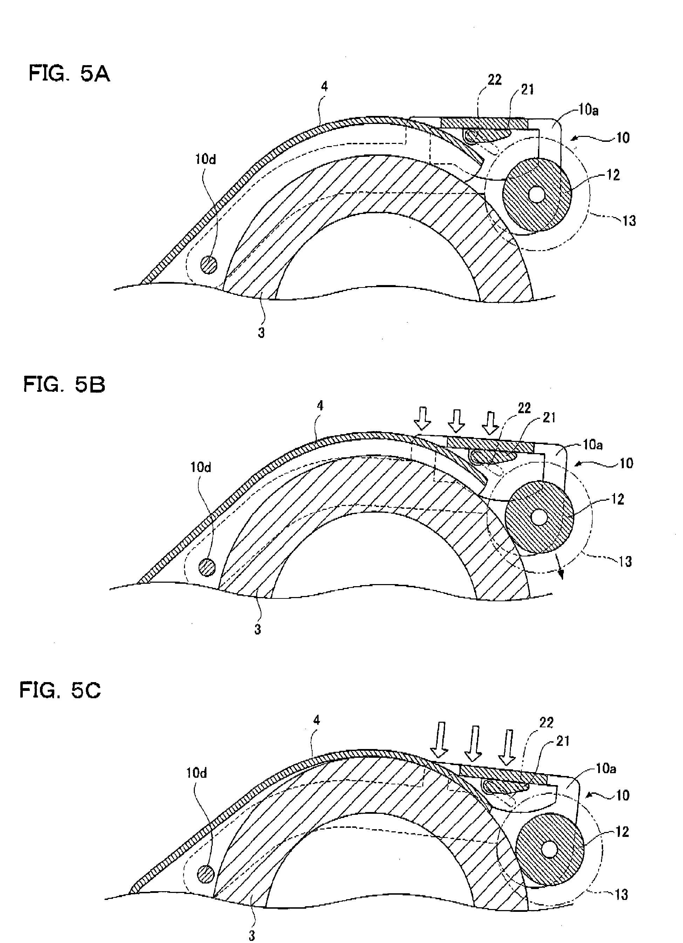

As shown in FIG. 5A, the positioning member 20 pivots the operation lever 22 in a predetermined direction (e.g., a counterclockwise direction) to lift the end of the contact member 21 to the swing arm 10 (upward). Thus, when the rider presses the brake plate 4 and/or the swing arm 10, the swing arm 10 can be held at a setup position allowing the driven roller 12 to come into contact with the wheel 3. As shown in FIG. 5B, when the rider presses the brake plate 4 and/or the swing arm 10, the swing arm 10 held at the setup position allows the driven roller 12 to come into contact with the outer surface 3a (wheel tread) of the wheel 3 (the bell 13 is operated to issue an alarm sound without braking the wheel 3) before the brake plate 4 comes into contact with the outer surface 3a (wheel tread) of the wheel 3. After that, as shown in FIG. 5C, when the rider further presses the brake plate 4 and/or the swing arm 10, the brake plate 4 comes into contact with the outer surface 3a of the wheel 3 to brake the wheel 3.

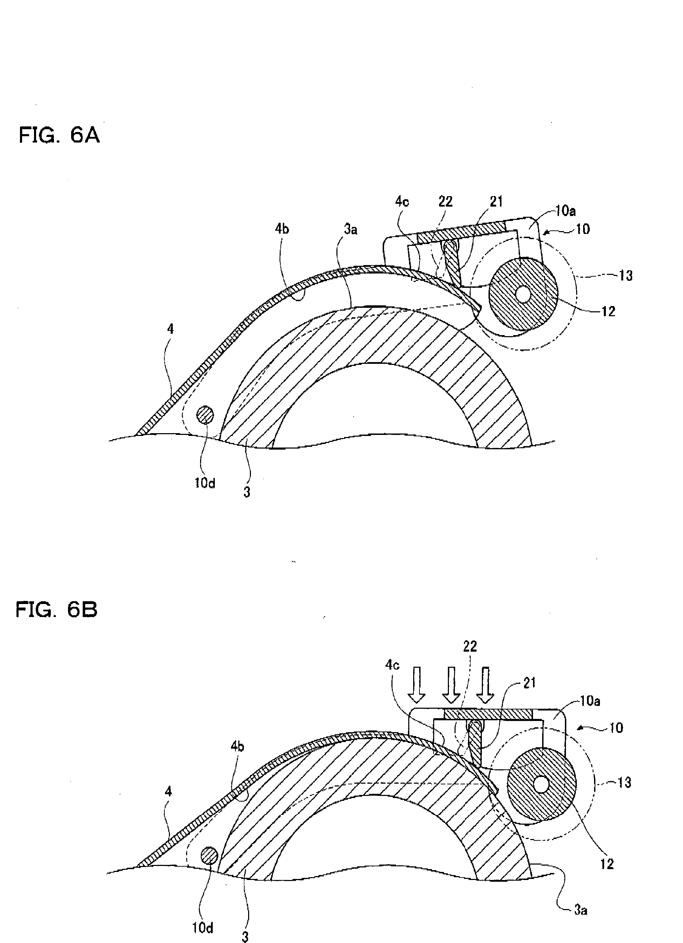

As shown in FIG. 6A, the positioning member 20 pivots the operation lever 22 in a predetermined direction (e.g., a clockwise direction) to bring the end of the contact member 21 into contact with an outer surface 4c of the brake plate 4. Thus, the swing arm 10 can be regulated at a lifted position where a press on the brake plate 4 and/or the swing arm 10 does not bring the driven roller 12 into contact with the wheel 3, that is, a position where a space is formed between the wheel 3 and the driven roller 12. As shown in FIG. 6B, even when the rider strongly presses the brake plate 4 and/or the swing arm 10, the swing arm 10 at the lifted position does not bring the driven roller 12 into contact with the outer surface 3a of the wheel 3, allowing only the inner surface 4b of the brake plate 4 to come into contact with the outer surface 3a of the wheel 3. In other words, an alarm sound is not issued from the bell 13 even during braking.

In this way, the positioning member 20 regulates the position of the swing arm 10 relative to the brake plate 4, keeping the swing arm 10 above the brake plate 4 all the time. Thus, even when the rider presses the brake plate 4 and/or the swing arm 10, the swing arm 10 does not swing below the brake plate 4. This forms a space between the wheel 3 and the driven roller 12 so as to separate the driven roller 12 from the wheel 3. Hence, an alarm sound is not issued from the bell 13.

Any mechanism may be used for pivotally operating the contact member 21. For example, the operation lever 22 in FIGS. 6A and 6B may be replaced with a dial mechanism having a rotary control structure. In the case of the dial mechanism, the outer surface of a dial is exposed from the pedal 10a of the swing arm 10. Only a sliding operation on the outer surface of the dial can change the orientation of the contact member 21 without operating the operation lever 22 in the space R.

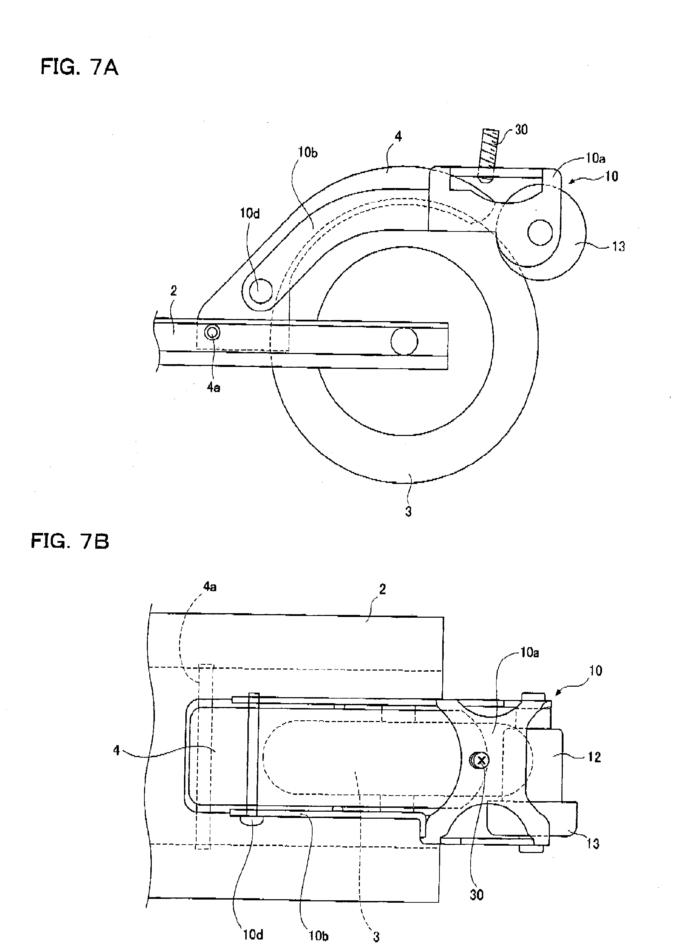

Instead of the positioning member 20 provided on the swing arm 10, as shown in FIGS. 7A and 7B, an adjusting screw 30 (repositioning member) screwed from the swing arm 10 is provided on the swing arm 10. The adjusting screw 30 may be brought into contact with the brake plate 4 to change the position of the swing arm 10 relative to the brake plate 4. In this case, the position of the swing arm 10 can be optionally changed relative to the brake plate 4, thereby optionally adjusting the timing for starting the sound of the bell 13 according to the amount of press on the brake plate 4 and/or the swing arm 10.

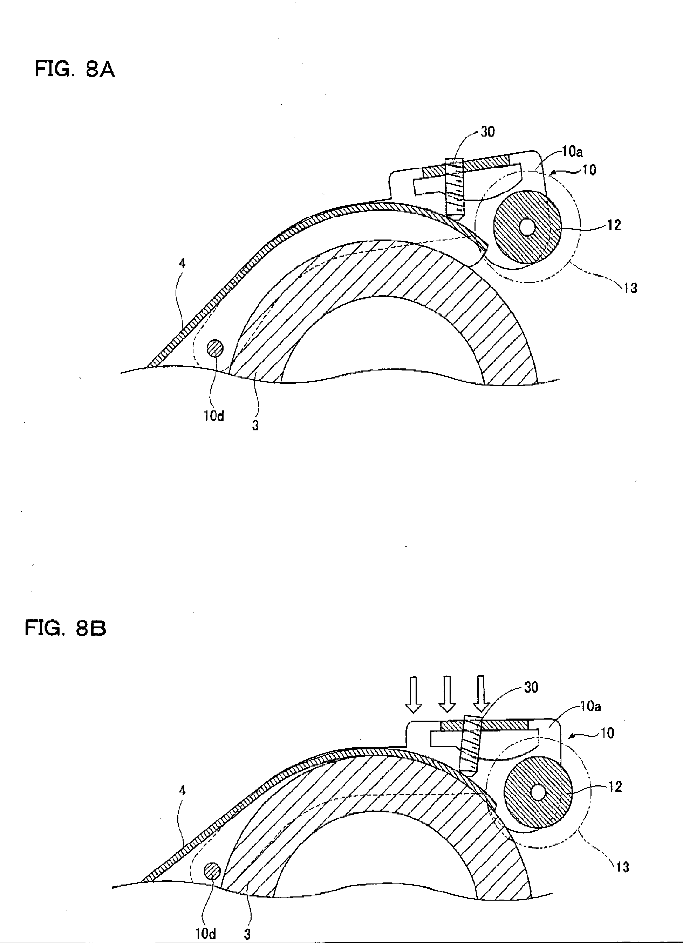

As shown in FIGS. 7A and 7B, the adjusting screw 30 is screwed into the pedal 10a of the swing arm 10. As shown in FIG. 8A, when the end of the adjusting screw 30 is screwed downward from the pedal 10a of the swing arm 10 so as to come into contact with the outer surface 4c of the brake plate 4, the adjusting screw 30 regulates the position of the swing arm 10 relative to the brake plate 4 (regulates swings made by the weight of the swing arm 10), holding the swing arm 10 above the brake plate 4. Hence, as shown in FIG. 8B, even when the rider presses the brake plate 4 and/or the swing arm 10, the swing arm 10 does not swing below the brake plate 4, forming a clearance between the wheel 3 and the driven roller 12 (an alarm sound is not issued from the bell 13).

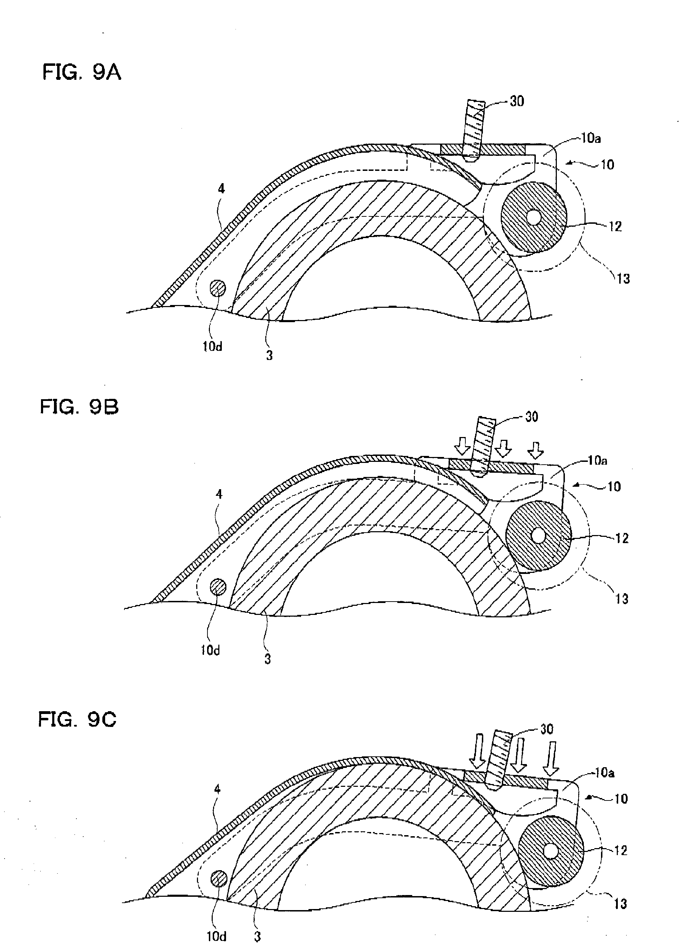

As shown in FIG. 9A, when the adjusting screw 30 is screwed upward from the pedal 10a of the swing arm 10, the end of the adjusting screw 30 is separated upward from the outer surface 4c of the brake plate 4. Thus, the adjusting screw 30 does not regulate the position of the swing arm 10 relative to the brake plate 4. This allows the swing arm 10 (the pedal 10a) to partially come into contact with the brake plate 4 by the weight of the swing arm 10 and thus be supported by the brake plate 4 based on the force of the spring. Therefore, as shown in FIGS. 9B and 9C, when the rider presses the brake plate 4 and/or the swing arm 10, the driven roller 12 comes into contact with the wheel 3 prior to the brake plate 4 (an alarming sound is issued from the bell 13 before the wheel 3 is braked).

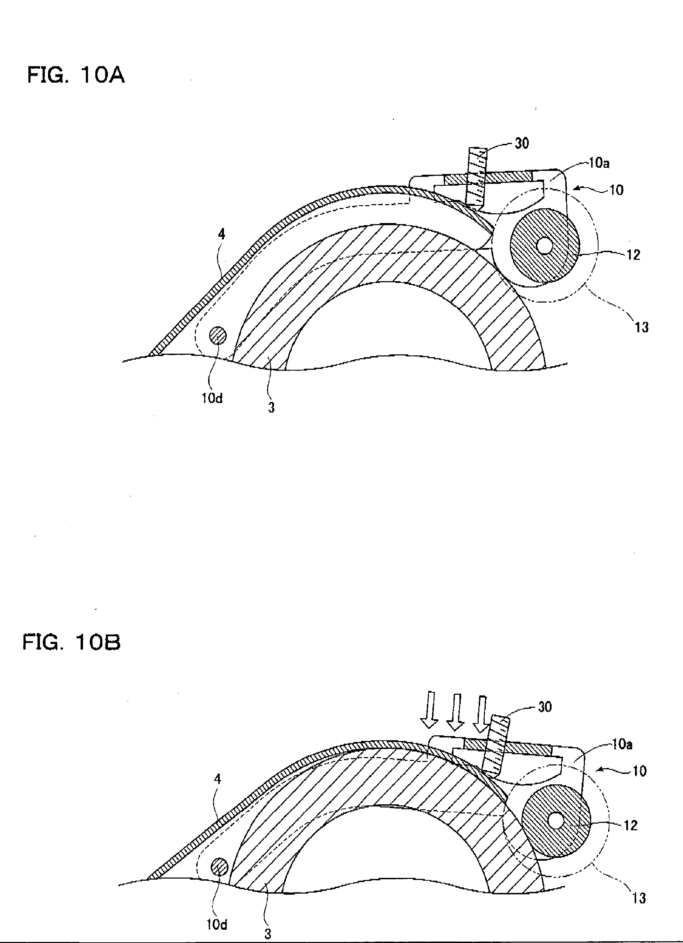

In this way, the amount of screwing of the adjusting screw 30 is adjusted to change the position of the swing arm 10 relative to the brake plate 4, thereby changing the position of the driven roller 12 relative to the wheel 3 when the rider presses the brake plate 4 and/or the swing arm 10. In other words, as shown in FIG. 8B, even when the brake plate 4 is sufficiently pressed to brake the wheel 3, the adjusting screw 30 is adjusted to a position where the driven roller 12 is not in contact with the wheel 3, preventing an alarm sound issued from the bell 13 regardless of whether the wheel 3 is braked or not. As shown in FIG. 9B, the adjusting screw 30 may be adjusted to start issuing an alarm sound of the bell 13 when the rider slightly presses the brake plate 4 and/or the swing arm 10. As shown in FIG. 10B, the adjusting screw 30 may be adjusted to start issuing an alarm sound from the bell 13 for the first time when the rider strongly presses the brake plate 4 and/or the swing arm 10. In other words, braking may be started concurrently with the start of an alarm sound from the bell 13.

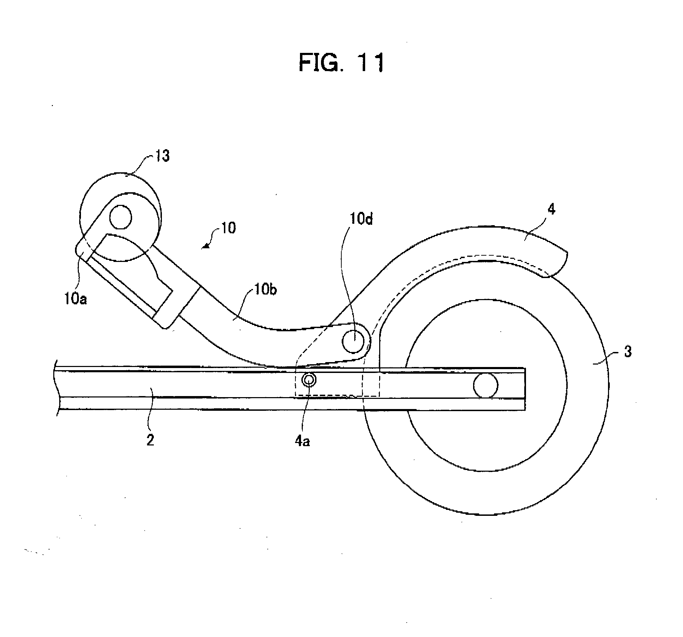

Furthermore, as shown in FIG. 11, the swing arm 10 may be pivoted with respect to the pivot fulcrum 10d of the swing arm 10 so as to move to the front of the pivot fulcrum 10d, allowing the driven roller 12 to retract to an operation release position. This configuration can completely prevent an alarm sound from the bell 13 regardless of whether the wheel 3 is braked or not.

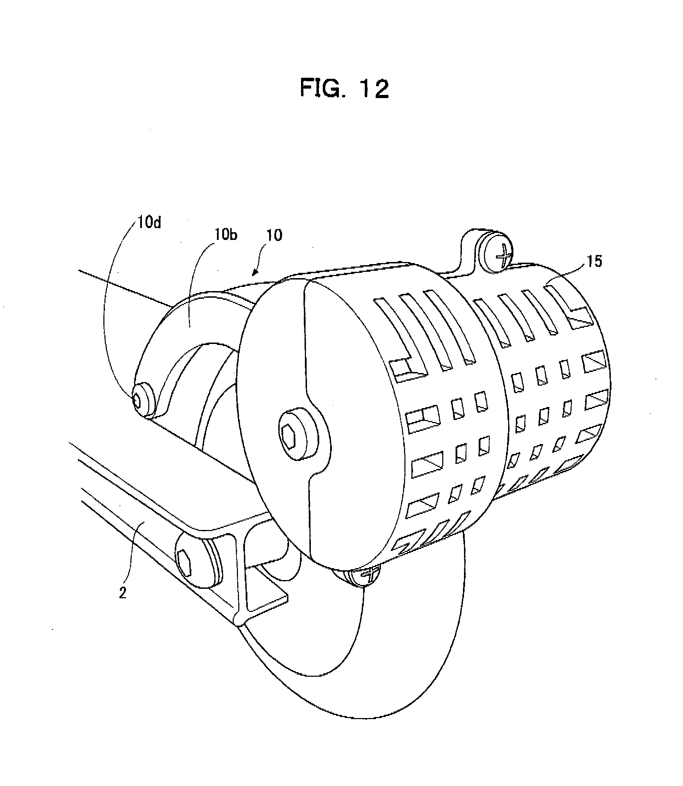

Moreover, as shown in FIG. 12, the driven roller 12 and the bell 13 are preferably covered with a cover 15 for safety. The cover 15 with holes can efficiently transmit sound from the bell 13 to the outside.

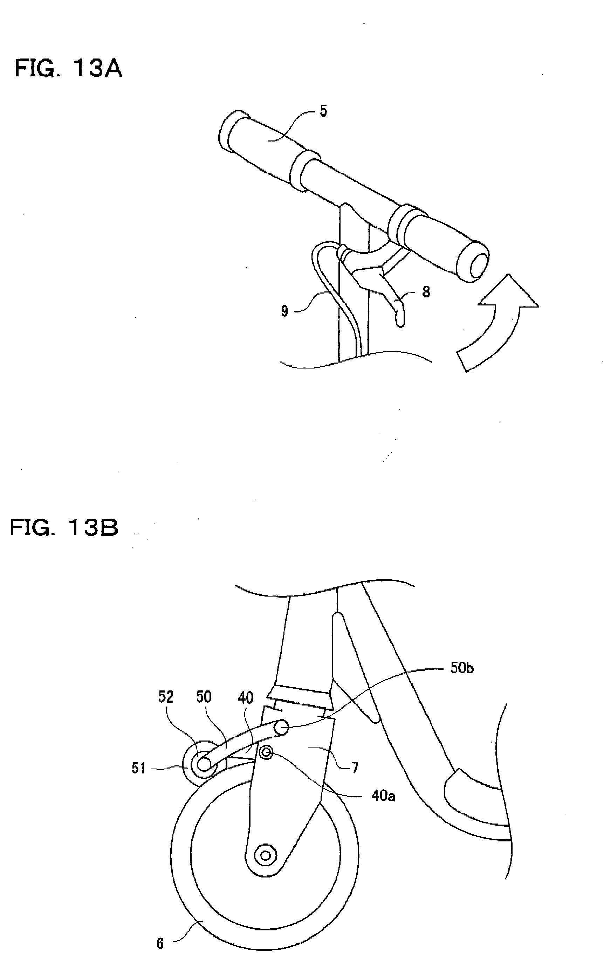

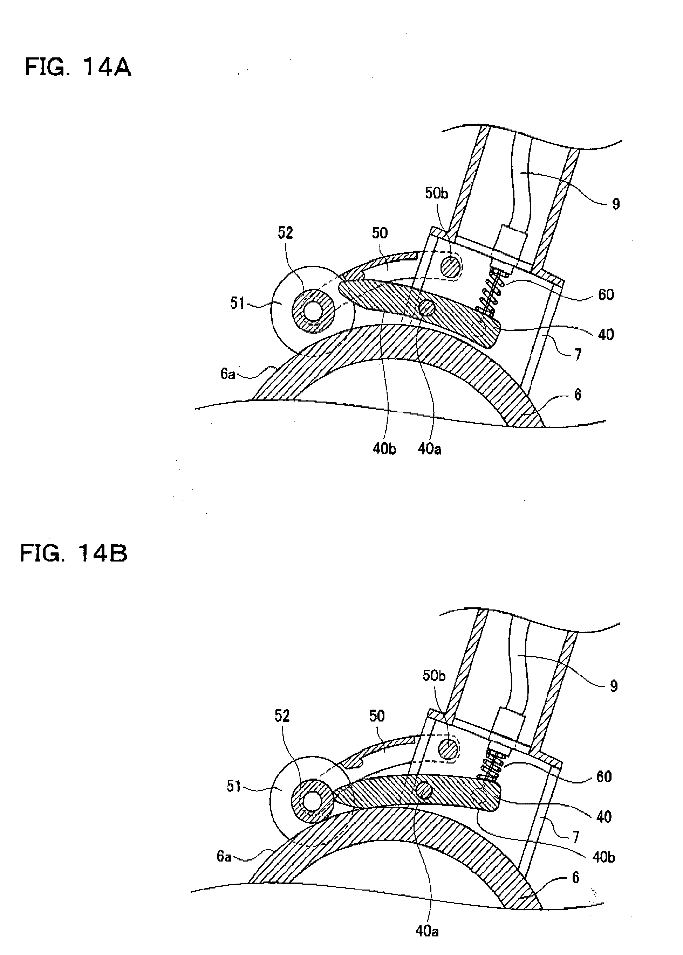

As shown in FIGS. 13A, 13B, 14A, and 14B, a wheel 6 (the front wheel of the skater 1) operated by a handlebar 5 is provided with a brake plate 40. A driven roller 52 is rotated in contact with the wheel 6 in synchronization with swinging of the brake plate 40, allowing issuing of an alarm sound from a bell 51 when the wheel 6 (the front wheel of the skater 1) is braked.

As shown in FIGS. 13A, 13B, 14A, and 14B, this configuration can vertically swing the brake plate 40 with respect to a fulcrum 40a provided on a front fork 7 supporting the wheel 6. One end (rear end) of the brake plate 40 is elastically supported by a wire 9 and a spring 60 that are extended from a brake lever 8 (see FIG. 13A) provided on the handlebar 5 (see FIG. 14A). The rider operates the brake lever 8 to pull up the wire 9. The pulling of the wire 9 rotates the one end (rear end) of the brake plate 40 upward about the fulcrum 40a against the force of the spring 60, rotating the other end (front end) of the brake plate 40 downward about the fulcrum 40a. Thus, an underside 40b of the brake plate 40 presses an outer surface 6a of the wheel 6 so as to apply a brake (brake the wheel 6). When the rider releases the brake lever 8, the spring 60 is urged to rotate the one end (rear end) of the brake plate 40 downward with respect to the fulcrum 40a. Thus, the outer surface 6a of the wheel 6 and the underside 40b of the brake plate 40 are held with a certain clearance.

As shown in FIG. 14A, a swing arm 50 is brought into contact with the other end (front end) of the brake plate 40 by the weight of the swing arm 50 and thus is supported by the brake plate 40 in a swinging manner. In other words, the swing arm 50 is supported by the brake plate 40 while being placed on the top surface of the brake plate 40. The swing arm 50 is provided along the top surface of the brake plate 40 and has one end (fixed end) pivotally supported with respect to a pivot fulcrum 50b provided on the front fork 7. Furthermore, the free end of the swing arm 50 includes the driven roller 52 that is pivotally supported and the bell 51 (signal generator) that can issue an alarm sound (warning signal) in response to the torque of the rotating driven roller 52. Like the bell 13 provided on the wheel 3 (the rear wheel of the skater 1), the bell 51 may be a known bell whose weight is subjected to a centrifugal force by the torque of the driven roller 12 and hits or bounces off a bowl-shaped metallic member so as to generate a sound.

As shown in FIG. 14A, when the rider operates the brake lever 8 (FIG. 13A), the swing arm 50 is caused to swing downward by the weight of the swing arm 50 and the driven roller 52 also swings downward in synchronization with a swing of the brake plate 40. As shown in FIG. 14B, the brake plate 40 then comes into contact with the outer surface 6a of the wheel 6 to brake the wheel 6; meanwhile, the driven roller 52 comes into contact with the outer surface 6a of the wheel 6 so as to operate the bell 13, issuing an alarm sound.

Thus, a swing of the brake plate 40 changes the position of the brake plate 40 relative to the wheel 6, reducing a clearance between the wheel 6 and the brake plate 40. Finally, the brake plate 40 comes into contact with the wheel 6 so as to brake the wheel 6.

Furthermore, a swing of the brake plate 40 changes the position of the driven roller 52 relative to the wheel 6, reducing a clearance between the wheel 6 and the driven roller 52. Finally, the driven roller 52 comes into contact with the wheel 6 to rotate the driven roller 52, issuing an alarm sound from the bell 51.

The swing arm 50 may include a positioning member like the positioning member 20 provided on the swing arm 10 (see FIGS. 4A and 4B), thereby regulating the position of the swing arm 50 relative to the brake plate 40.

The swing arm 50 may include an adjusting screw (repositioning member) screwed from the swing arm 50, like the adjusting screw 30 (repositioning member) illustrated in FIGS. 7A and 7B. The adjusting screw comes into contact with the brake plate 40 so as to change the position of the swing arm 50 relative to the brake plate 40.

While the brake plate 4, the swing arm 10, the driven roller 12, and the bell 13 are provided on the wheel 3 that is the rear wheel of the skater 1, the brake plate 40, the swing arm 50, the driven roller 52, and the bell 51 may be provided on the wheel 6 that is the front wheel of the skater 1.

The warning signal is not limited to the sound of the bell 13 and the bell 51 and thus may be a sound of a bell other than the bell 13, light, and other signals.

## Claims

1. A skater with a brake, comprising a brake plate that extends above a wheel while being supported so as to swing in a vertical direction, the brake plate being pressed from above in sliding contact with an outer surface of the wheel so as to brake the wheel,
the skater comprising:
a driven roller that rotates in contact with the wheel in synchronization with a swing of the brake plate; and
a signal generator that generates a warning signal in response to the rotation of the driven roller,
wherein the swing of the brake plate brings the driven roller into contact with the wheel so as to generate the warning signal from the signal generator, and the brake plate comes into sliding contact with the outer surface of the wheel so as to brake the wheel.

2. The skater with the brake according to claim 1, wherein the brake plate is provided for the wheel attached on a board body.

3. The skater with the brake according to claim 1, wherein the brake plate is provided for the wheel operated by a handlebar.

4. The skater with the brake according to any one of claims 1 to 3, wherein a swing arm is supported by the brake plate in a swinging manner, and
the driven roller is rotatably supported by the swing arm and is rotated in contact with the wheel by a swing of the swing arm.

5. The skater with the brake according to claim 4, wherein the swing arm includes a positioning member that regulates the swing arm at a position where a clearance is formed between the wheel and the driven roller.

6. The skater with the brake according to claim 4, wherein the swing arm includes a repositioning member that changes a position of the swing arm relative to the brake plate so as to change a position of the driven roller relative to the wheel.
